# NEUE EUROPÄISCHE PATENTSCHRIFT

(11) **EP 3 358 932 B2**
(45) Veröffentlichungstag und Bekanntmachung des Hinweises auf die Entscheidung über den Einspruch: **23.08.2023**
(45) Hinweis auf die Patenterteilung: 15.04.2020
(21) Anmeldenummer: 16787345.4
(22) Anmeldetag: 30.09.2016
(51) Int. Cl.: A01D 41/127, A01B 79/00, A01D 43/08

(54) **VERFAHREN ZUM BETREIBEN EINER ERNTEMASCHINE MIT HILFE EINES PFLANZENWACHSTUMSMODELLS**
METHOD FOR OPERATING A HARVESTER USING A PLANT GROWTH MODEL
PROCEDE DE FONCTIONNEMENT D'UNE MOISSONNEUSE A L'AIDE D'UN MODELE DE CROISSANCE DE PLANTE

(30) Priorität: 05.10.2015 EP 15188312
(43) Veröffentlichungstag der Anmeldung: 15.08.2018
(60) Teilanmeldung: 20163114.0
(73) Patentinhaber: BASF Agro Trademarks GmbH, 67063 Ludwigshafen am Rhein (DE)
(72) Erfinder: PETERS, Ole, 40217 Düsseldorf (DE)
(74) Vertreter: Maiwald GmbH
(86) Internationale Anmeldenummer: PCT/EP2016/073400
(87) Internationale Veröffentlichungsnummer: WO 2017/060168

(56) Entgegenhaltungen:
- EP-A1- 2 803 256
- WO-A2-2013/063106
- DE-B3-102005 000 770
- DE-C1- 4 431 824
- US-A- 5 995 895
- US-A1- 2012 101 784
- US-A1- 2012 109 614
- US-A1- 2015 105 984
- J G Arnold ET AL: "Chapter 8. PLANT GROWTH COMPONENT", , 1. Juli 1995 (1995-07-01), XP055257541, Gefunden im Internet: URL:http://www.ars.usda.gov/SP2UserFiles/a d_hoc/36021500WEPP/chap8.pdf [gefunden am 2016-03-11]

## Beschreibung

Die Erfindung betrifft ein Verfahren zum Betreiben einer Erntemaschine zum Ernten eines Ernteguts auf einem Feld, wobei wenigstens ein Betriebswert für ein Arbeitsorgan der Erntemaschine in Abhängigkeit einer Pflanzeneigenschaft des Ernteguts bestimmt wird.

Die Fahrgeschwindigkeit, mit der die Erntemaschine über das Feld fährt, um den vor ihr stehenden Erntegutbestand zu ernten, stellt beispielsweise einen solchen Betriebswert für den Antriebsmotor oder das Getriebe der Erntemaschine dar. Aus dem Stand der Technik sind Steuerungen bekannt, die in Abhängigkeit der Pflanzeneigenschaft in Form der Höhe oder der Dichte des Erntegutbestands einen Wert für die Fahrgeschwindigkeit vorschlagen.

Aus der DE 44 31 824 C1 ist ein Verfahren zum Betreiben eines Mähdreschers bekannt, wobei auf ein Datenkataster zurückgegriffen wird. In dem Datenkataster sind in Abhängigkeit von Ortskoordinaten flächenspezifische Ertragsmessdaten aus der Vergangenheit gespeichert. Der Ertrag eines Ernteguts stellt dabei auch eine mögliche Pflanzeneigenschaft dar. In Abhängigkeit der aktuellen Ortskoordinaten des Mähdreschers werden Daten aus dem Datenkataster für die Berechnung eines Sollwerts für die Fahrgeschwindigkeit des Mähdreschers verwendet. Das Verfahren verwendet somit Daten aus der Vergangenheit, die nur begrenzt auf die aktuelle Ertragssituation übertragen werden können.

Die DE 10 2005 000 770 B3 beschreibt ein Verfahren zur Steuerung von Arbeitsorganen eines Mähdreschers mit Hilfe georeferenzierter Daten, wobei diese Daten während der Biomassenentwicklung gewonnen und aufgezeichnet werden. Aus den Biomassedaten wird mittels einer Software eine Sollkarte erstellt, die zur Steuerungsgrundlage des Mähdreschers dient. In einem Ausführungsbeispiel wird ein Biomassenbestand von Satelliten gestützten Erkennungssysteme georeferenziert während der Biomasseentwicklung, also im Vorfeld der Ernte erfasst. Dieser Biomassenbestand kann ebenfalls als Pflanzeneigenschaft angesehen werden und wird in einer Biomassenbestandskarte aufgezeichnet. Jedoch können auf diese Weise nicht alle Pflanzeneigenschaften des Ernteguts erfasst werden, welche Einfluss auf die Betriebswerte der verschiedenen Arbeitsorgane der Erntemaschine haben. Auch kann zwischen der letzten Aufzeichnung zum Biomassenbestand und dem Zeitraum der Ernte eine gewisse Zeit liegen, sodass aktuelle Ereignisse vor der Ernte wie eine Trockenperiode oder eine intensive Regenzeit, die großen Einfluss auf Pflanzeneigenschaften wie Kornfeuchte oder Strohfeuchte haben können, nicht berücksichtigt werden.

Aus der EP 2 586 286 B1 ist ein Verfahren zur vorausschauenden Untersuchung von mit einer Erntemaschine aufzunehmenden Ernteguts bekannt, wobei eine auf der Erntemaschine angeordnete Sensoranordnung berührungslos Signale hinsichtlich mindestens einer Pflanzeneigenschaft des Ernteguts erzeugt und daraus statistische Werte abgeleitet werden. Zudem erfasst eine Messeinrichtung eine Pflanzeneigenschaft von tatsächlich in der Erntemaschine aufgenommenem Erntegut. Eine Auswerteeinheit bestimmt dabei selbsttätig Zusammenhänge zwischen den statistischen Werten der Signale der Sensoranordnung und den Signalen der Messeinrichtung. Diese Zusammenhänge werden dann bei der Berechnung der Pflanzeneigenschaft des aufzunehmenden Ernteguts berücksichtigt. Die Signale der Sensoranordnung werden unter Berücksichtigung der ermittelten Zusammenhänge zur Steuerung der Fahrgeschwindigkeit der Erntemaschine verwendet. Die Fahrgeschwindigkeit hängt somit von den absoluten Messwerten der berührungslosen Sensoren der Sensoreinrichtung ab, die in der Praxis aber nicht immer hinreichend genau arbeiten.

Die EP 2 803 256 A1 offenbart einen Mähdrescher mit an dem Dach der Führerkabine angebrachten Sensoren, die eine berührungslose Erfassung eines vor der Erntemaschine stehenden Erntegutsbestands ermöglichen. Daraus werden Daten hinsichtlich eines zu erwartenden Massendurchsatzes bereitgestellt. Zudem wird über eine Messeinrichtung ein tatsächlicher Massendurchsatz ermittelt. Eine Steuerung für die Fahrgeschwindigkeit ist so ausgelegt, das der Messwert der Messeinrichtung und der zu erwartenden Massendurchsatz miteinander verglichen werden und das Ergebnis des Vergleichs als Rückkopplungswert zur Festlegung einer Fahrgeschwindigkeit der Erntemaschine verwendet wird. Betriebswerte von bestimmten Arbeitsorganen des Mähdreschers hängen jedoch von Pflanzeneigenschaften ab, deren messtechnische Erfassung sehr schwierig und daher oft ungenau ist. Auch besteht das Problem, dass die auf dem Dach der Führerkabine angebrachten Sensoren naturgemäß nur begrenzt vorausschauend Pflanzeneigenschaften ermitteln können, was hohe Anforderungen an die Regelung der Betriebswerte des Mähdreschers stellt.

Der Erfindung liegt daher die Aufgabe zu Grunde, ein Verfahren zum Betreiben einer Erntemaschine zum Ernten eines Ernteguts bereit zu stellen, durch das ein Betriebswerts für wenigstens ein Arbeitsorgan der Erntemaschine einfach und gut bestimmt werden kann.

Der der Erfindung zu Grunde liegende Aufgabe wird mit der Merkmalskombination gemäß Anspruch 1 gelöst. Ausführungsbeispiele der Erfindung können den Unteransprüchen entnommen werden. Wie oben bereits angeführt, soll auch die Fahrgeschwindigkeit der Erntemaschine beim Ernten als ein Betriebswert des Antriebs der Erntemaschine aufgefasst werden.

Gemäß Anspruch 1 wird die wenigstens eine Pflanzeneigenschaft in einem Pflanzenwachstumsmodell abgebildet, wobei das Pflanzenwachstumsmodell eine zeitliche Entwicklung der Pflanzeneigenschaft modelliert und für den Zeitraum der Ernte einen voraussichtlichen Wert oder eine voraussichtliche Ausprägung der Pflanzeneigenschaft ermittelt.

Die wenigstens eine Pflanzeneigenschaft umfasst die Höhe des Erntegutbestands und ist in dem Pflanzenwachstumsmodell abgebildet, für die dort eine zeitliche Entwicklung modelliert wird. Aus dieser Modellierung lässt sich dann der voraussichtliche Wert am Tag der Ernte beispielsweise für die Höhe des Erntegutbestands angeben.

Weitere Beispiele für die Pflanzeneigenschaft, die im Pflanzenwachstumsmodell geführt werden können, sind Ertragsdaten für Stroh und Ertragsdaten für Körner bei Getreide, Kornfeuchte und Strohfeuchte, Maiskolbendurchmesser, Ansatzhöhe Maiskolben, Durchmesser Maistängel, Einzelkorngröße (Tausendkorngewicht), Druschfähigkeit (Mürbigkeitsgrad der Ähre), Proteingehalt bei Getreide und Krankheitsdruck (Mykotoxingehalt), und Lagerisiko.

Vorzugsweise führt das Pflanzenwachstumsmodell eine Vielzahl von verschiedenen Pflanzeneigenschaften. Wenn im Folgenden Bezug genommen wird auf die oder die wenigstens eine Pflanzeneigenschaft, schließt dies alle anderen vom Pflanzenwachstumsmodell modellierten Pflanzeneigenschaften mit ein.

Beispielsweise können für das Erntegut Mais die Pflanzeneigenschaften Maiskolbendurchmesser, Durchmesser des Maisstängels und Ansatzhöhe des Maiskolben im Pflanzenwachstumsmodell berücksichtigt und modelliert werden. Aus einer oder mehreren Pflanzeneigenschaften können sich eine oder mehrere weitere Pflanzeneigenschaften ableiten lassen, wie zum Beispiel die Ertragsdaten für ein Erntegut. Allgemein kann so eine zweite Pflanzeneigenschaft aus einer ersten Pflanzeneigenschaft abgeleitet werden. Entsprechend lässt sich über das Pflanzenwachstumsmodell die abgeleitete zweite Pflanzeneigenschaft in ihrem zeitlichen Verlauf darstellen, wenn auf einen zeitlichen Verlauf der ersten Pflanzeneigenschaft zurückgegriffen werden kann.

Die Erntemaschine kann ein Mähdrescher, Feldhäcksler oder eine sonstige Maschine sein, durch die stehendes oder liegendes Erntegut von einem Feld aufgenommen und gesammelt und dabei möglicherweise direkt weiteren Verfahrensschritten zugeführt wird.

Im Fall eines Mähdreschers kann mit Hilfe eines in der Höhe einstellbaren Schneidwerks Körnerfrüchte wie insbesondere Getreide gemäht werden, das zwecks Trennung von Korn und Stroh dann einem Dreschaggregat zugeführt werden kann, das einen Dreschkorb mit eine rotierenden Dreschtrommel aufweist. Über die Einstellung der Trommeldrehzahl und die Einstellung des Dreschspaltes zwischen Dreschtrommel und Dreschkorb kann die Intensität des Druschs erhöht oder reduziert werden. Dem Dreschaggregat kann eine Abscheidevorrichtung nachgeschaltet sein, in der die restlichen Körner und nicht vollständig ausgedroschene Ähren vom Stroh getrennt werden. In einer Reinigungsvorrichtung kann eine weitere Trennung von Körnern und Nicht-Korn-Bestandteilen erfolgen. Die Reinigungsvorrichtung weist bevorzugt Siebe und ein Luftgebläse auf, wobei auf die Siebe ein Luftstrom (Wind) wirkt. Der Luftstrom dient dazu, dass leichtere Bestandteile wie die Nicht-Korn-Bestandteile nicht durch die Siebe fallen, sondern weggeblasen und somit von den Körner getrennt werden, die durch die Siebe fallen.

Wird vom Pflanzenwachstumsmodell beispielsweise die Strohfeuchte abgebildet, kann für den Zeitraum der Ernte ein voraussichtlicher Wert für die Strohfeuchte ermittelt werden. Wird ein hoher Wert durch das Pflanzenwachstumsmodell berechnet, kann entsprechend für das Dreschaggregat (Arbeitsorgan) eine größere Trommeldrehzahl (Betriebswert) voreingestellt werden. Auch kann der Luftstrom (der Luftstrom stellt hier einen möglichen Betriebswert des Arbeitsorgans Gebläse dar) entsprechend höher eingestellt werden, da feuchteres Stroh schwerer ist und sich daher nur bei größerem Luftstrom wegblasen lässt.

Im Falle eines Feldhäckslers kann die Strohfeuchte als Einflussgröße für eine Einstellung der Schnittlänge verwendet werden. Für eine trockene Silage sind kürzere Schnittlängen vorteilhaft, um dieses ausreichend verdichten zu können.

Wird die Einzelkorngröße (Tausendkorngewicht) vom Pflanzenwachstumsmodell als Pflanzeneigenschaft geführt, so kann in Abhängigkeit dieses Parameters der Dreschspalt zwischen Dreschtrommel und Dreschkorb eingestellt werden. Bei kleinen Körnern kann die Intensität des Luftstroms des Gebläses reduziert werden, da ansonsten in der Reinigungsvorrichtung ein zu großer Anteil von Körnern mit den Nicht-Korn-Bestandteilen weggeblasen wird. Steht ein Wert für die Druschfähigkeit (Mürbigkeitsgrad Ehre) zum Zeitraum der Ernte zur Verfügung, kann bei brüchigen Ehren ein eher kleinerer Wert für die Trommeldrehzahl eingestellt werden, um so die dem Dreschaggregat nachgeschaltete Reinigungsvorrichtung zu entlasten, da eine kleinere Trommeldrehzahl in der Regel mit einem kleineren Anteil von Kurzstroh in der Reinigungsvorrichtung verbunden sind.

Der einstellbare Abstand von Pflückplatten kann ebenfalls ein Betriebswert darstellen, der in Abhängigkeit einer Pflanzeneigenschaft des Ernteguts durch das beschriebene Verfahren bestimmt wird. Gibt beispielsweise das Pflanzenwachstumsmodell einen Wert für den Durchmesser des Maisstängels an, so kann entsprechend der Abstand der Pflückplatten darauf abgestimmt werden. Ein gut eingestellter Plattenabstand sorgt für einen sauberen Einzug und reduziert die Gefahr von Verstopfungen. Alternativ oder zusätzlich kann das Verfahren den Mailkolbendurchmesser als Einflussgröße für den Abstand der Pflückplatten vorsehen.

Die Ansatzhöhe der Maiskolben, welche ebenfalls durch das Pflanzenwachstumsmodell modelliert werden kann, kann als Einflussgröße für die Höhe des Schneidwerks verwendet werden. Ein höher geführtes Schneidwerk reduziert das Beschädigungsrisiko und führt zu einem kleineren Leistungsbedarf am Schneidwerk. Die Höhe des Schneidwerks kann auch von der vom Pflanzenwachstumsmodell berechneten Bestandshöhe des Ernteguts oder dem Lagerrisiko abhängen.

Die Biomasse bei Mais kann als Einflussgröße dienen bei der Bestimmung einer günstigen oder optimalen Fahrgeschwindigkeit des Feldhäckslers. Die Ertragsdaten Stroh bei Getreide kann die Fahrgeschwindigkeit des Mähdreschers beeinflussen. Ertragsdaten bezüglich der Körner bei Getreide können verwendet werden, um die Geschwindigkeit des Luftstroms in der Reinigungsvorrichtung einzustellen. Deuten die Ergebnisse des Pflanzenwachstumsmodells auf sehr kleine Werte für die Kornfeuchte (sehr trockenes Korn) hin, kann durch entsprechende Einstellungen der Arbeitsorgane darauf reagiert werden, um weniger Bruchkorn zu erhalten.

Ein weiteres Beispiel ist die Ertragsbildung in den Kolben der Maispflanze. Besteht hier in der kurzen Phase während der Blütezeit Trockenstress, werden nicht alle Kornansätze befruchtet. Die Kolben enthalten deutlich weniger Körner. Dieser Zusammenhang lässt sich in einem Pflanzensimulationsmodell nachbilden, jedoch nicht über Fernerkundung oder das Umfeld erfassende Sensoren an einer Erntemaschine.

Der voraussichtliche Wert oder die voraussichtliche Ausprägung der Pflanzeneigenschaft auf dem Feld kann georeferenziert ermittelt werden. Dies bedeutet, dass dem voraussichtlichen Wert oder der voraussichtlichen Ausprägung der Pflanzeneigenschaft entsprechende Ortskoordinaten in einer gewissen räumlichen Auflösung zugeordnet werden. Ergebnis einer solchen Zuordnung könnte eine Karte sein, die die Werte der Pflanzeneigenschaft in hoher räumlicher Auflösung wie beispielsweise 100 mal 100 m, 50 mal 50 m oder gar 5 mal 5 m darstellt. So können für jedes Flächenelement ein absoluter Wert oder auch ein relativer Werte für eine oder mehrere Pflanzeneigenschaften hinterlegt sein. Jedem Flächenelement kann hinsichtlich der Pflanzeneigenschaft auch nur eine qualitative Klasse beispielsweise von "1, 2, ...5" bis 5 oder "sehr klein, klein, mittel, groß und sehr groß" zugeordnet sein. Diese Karte oder ein entsprechender Datensatz kann einer Steuerungsvorrichtung der Erntemaschine zugeführt werden, wobei dann die Steuerungsvorrichtung die einzelnen Arbeitsorgane so einstellt, dass deren Betriebswerte zu einem optimalen Ernteergebnis führen. Alternativ ist es möglich, dass die Betriebswerte dem Führer der Erntemaschine nur vorgeschlagen werden, der diese dann mit seinen persönlichen Erfahrungswerten abgleicht und dann selber die einzelnen Betriebswerte für die Arbeitsorgane einstellt.

Das Pflanzenwachstumsmodell ermittelt den voraussichtlichen Wert oder die voraussichtliche Ausprägung der Pflanzeneigenschaft für den Zeitraum der Ernte, wobei dieser Zeitraum beispielsweise eine Woche oder ein Tag sein kann, in der oder an dem die Ernte stattfinden soll. Es ist aber auch möglich, dass der Zeitraum nur einige Stunden beispielsweise kleiner als 3 Stunden) beträgt, umso den Wert oder die Ausprägung einer Pflanzeneigenschaft, die sich im Tagesverlauf ändert, genau angeben zu können. Der Zeitraum der Ernte kann also als Eingabegröße verstanden werden, der von außen vorgegeben wird. In einem alternativen Ausführungsbeispiel wird ein bevorzugter oder optimaler Zeitraum durch das Pflanzenwachstumsmodell berechnet.

In einem Ausführungsbeispiel werden meteorologische Daten verwendet, die Einfluss auf den Wert oder die Ausprägung der Pflanzeneigenschaft haben können. Beispielsweise können - vorzugsweise in hoher räumlicher Auflösung - die Lufttemperatur, die Luftfeuchtigkeit, die Sonnenstunden und/oder Niederschlagsmengen berücksichtigt werden. Diese Größen haben einerseits entscheidenden Einfluss auf das Wachstum des Ernteguts und beeinflussen somit eine Vielzahl von Pflanzeneigenschaften. Andererseits können sie auch einen unmittelbaren Einfluss auf gewisse Pflanzeneigenschaften wie beispielsweise die Strohfeuchte haben.

In dem erfindungsgemäßen Verfahren können auch Bodendaten verwendet werden, die Einfluss auf das Wachstum des Ernteguts haben. Beispielsweise kann für ein Flächenelement des Felds zu unterschiedlichen Zeitpunkten in der Wachstumsperiode der Wassergehalt des Bodens errechnet werden. Anhand dieses Wertes kann das Pflanzenwachstumsmodell dann die Menge an Wasser modellieren, die das Erntegut dem Boden entzieht. Der Wassergehalt des Bodens, vorzugsweise auch hier dargestellt in hoher räumlicher Auflösung für einzelne Flächenelemente, kann dabei auch unter Berücksichtigung der meteorologischen Daten berechnet werden.

In einem Ausführungsbeispiel verwendet das Pflanzenwachstumsmodell Fernerkundungsdaten, die von einem Satelliten erfasst werden. Beispielsweise lässt sich georeferenziert auf Basis von Satellitendaten ein Vegetationsindex (beispielsweise NDVI) berechnen, aus dem sich die Biomasse auf dem Feld ableiten lässt. Derartige Daten zum Vegetationsindex können einerseits als Grundlage für andere Pflanzeneigenschaften dienen, die über die Fernerkundung nicht erfasst werden können. Andererseits können die Fernerkundungsdaten dazu verwendet werden, bestimmte Annahmen bei der Modellierung des Pflanzenwachstums zu verifizieren und entsprechend anzupassen. Berechnet beispielsweise das Pflanzenwachstumsmodell die Biomasse auf dem Feld, so kann diese Pflanzeneigenschaft über die Satellitendaten überprüft und gegebenenfalls angepasst werden.

Darüber hinaus ist es möglich, dass über die Fernerkundung auch die Bodenfeuchtigkeit des Bodens gemessen wird. Die Bodenfeuchte kann dabei bei der Berechnung des Wassergehalts des Bodens berücksichtigt werden. In diesem Fall würde das Pflanzenwachstumsmodell die Daten zur Bodenfeuchte nur indirekt verwenden, nämlich über die Modellierung des Wassergehalts des Bodens.

An der Erntemaschine kann eine Messvorrichtung angebracht sein, wobei anhand der Signale der Messvorrichtung der voraussichtliche Wert oder die voraussichtliche Ausprägung der Pflanzeneigenschaft kalibriert wird. Die Messvorrichtung kann einen berührungslosen Sensor und/oder einen Sensor für tatsächlich geerntetes Erntegut umfassen.

Ist beispielsweise der berührungslose Sensor auf dem Dach einer Führerkabine der Erntemaschine angebracht und ausgelegt, die Bestandshöhe des Ernteguts zu messen, können seine Messergebnisse verwendet werden, die von dem Pflanzenwachstumsmodell berechnete Bestandshöhe zu überprüfen und gegebenenfalls anzupassen. Stellt sich heraus, dass beim Beginn des Erntevorgangs die vom Pflanzenwachstumsmodell berechnete Bestandshöhe von der gemessenen Bestandshöhe abweicht, kann anhand dieser Abweichung zumindest diese Pflanzeneigenschaft entsprechend kalibriert werden. Eine solche Kalibrierung kann auch Einfluss auf andere Pflanzeneigenschaften haben, die dann ebenfalls angepasst werden können. Die Kalibrierung kann einmalig am Beginn eines Erntevorgangs oder auch fortlaufend während der Ernte erfolgen, also wenn die Erntemaschine über das Feld fährt und das Erntegut einsammelt.

Eine Kalibrierung kann auch durch den Sensor für das tatsächlich geerntete Erntegut erfolgen. Beispielsweise kann so das Gewicht des geernteten Korns dem Gewicht gegenübergestellt werden, das auf Basis des Pflanzenwachstumsmodells unter Berücksichtigung gewisser Kornverluste der Erntemaschine hätte geerntet werden können. Entsprechende Pflanzeneigenschaften können dann nachjustiert werden. Diese Kalibrierung kann auch georeferenziert erfolgen, wobei hier georeferenzierte Ertragsdaten des Sensors für das tatsächlich geerntete Erntegut den entsprechenden georeferenzierten in Daten des Pflanzenwachstumsmodells gegenübergestellt werden.

Für die Modellierung der Pflanzeneigenschaft können Vergangenheitswerte aus einer vorhergehenden Wachstumsperiode oder einer vorhergehenden Ernte verwendet werden. Dadurch lassen sich bestimmte Annahmen bei der Modellierung der Pflanzeneigenschaften verifizieren und genauer formulieren.

Das Feld kann in Segmente aufgeteilt werden, wobei dann zwischen Segmenten einer ersten Gruppe und Segmente wenigstens einer zweiten Gruppe unterschieden wird, die sich hinsichtlich der Pflanzeneigenschaft voneinander unterscheiden. Beispielsweise kann ein Schwellenwert für den Proteingehalt des Ernteguts definiert werden, sodass alle Segmente, die unterhalb des Schwellenwerts liegen, der ersten Gruppe und alle Segmente, die durch ein Proteingehalt oberhalb des Schwellenwerts gekennzeichnet sind, der zweiten Gruppe zugeordnet werden. Je nach räumlicher Auflösung können die Segmente die einzelnen Flächenelemente sein, sie können aber auch sich aus mehreren Flächenelementen zusammensetzen.

In einem Ausführungsbeispiel werden zunächst die Segmente der ersten Gruppe und danach die Segmente der zweiten Gruppe abgeerntet. Somit ist es möglich, eine selektive Ernte durchzuführen, die durch unterschiedliche Proteingehalte gekennzeichnet ist.

Eine andere Möglichkeit besteht darin, dass ein erster Erntegutbehälter gefüllt wird, wenn auf einem der Segmente der ersten Gruppe geerntet wird und dass ein zweiter Erntegutbehälter gefüllt wird, wenn auf einem der Segmente der zweiten Gruppe geerntet wird. In diesem Fall umfasst die Erntemaschine eine Trennvorrichtung, die in Abhängigkeit der Pflanzeneigenschaft Proteingehalt den ersten Erntegutbehälter oder den zweiten Erntegutbehälter befüllt. Bei der Steuerung der Trennvorrichtung können gewisse zeitliche Verzögerungen, bedingt durch die Fahrgeschwindigkeit der Erntemaschine und der Zeit, die benötigt wird, dass Erntegut von einem Flächenelement des Feld bis zu der Trennvorrichtung in der Erntemaschine zu befördern, berücksichtigt werden.

Eine andere Anwendung für die oben beschriebene selektive Ernte ist der Gehalt an Mykotoxinen, der ebenfalls Ergebnis der Berechnungen des Pflanzenwachstumsmodells sein kann. Auch hier kann eine selektive Ernte über die zeitliche Trennung der Ernte der Segmente (erst werden die Segmente mit eher kleineren Mykotoxingehalt, dann die Segmente mit eher größerem Mykotoxingehalt geerntet) oder über die Ansteuerung der Trennvorrichtung erfolgen, die das Erntegut entweder dem ersten oder dem zweiten Erntegutbehälter zuführt.

## Patentansprüche

1. Verfahren zum Betreiben einer Erntemaschine zum Ernten eines Ernteguts auf einem Feld, wobei wenigstens ein Betriebswert für ein Arbeitsorgan der Erntemaschine in Abhängigkeit wenigstens einer Pflanzeneigenschaft des Ernteguts bestimmt wird, **dadurch gekennzeichnet, dass** die Pflanzeneigenschaft in Form einer Höhe eines Erntegutbestands in einem Pflanzenwachstumsmodell abgebildet ist, wobei das Pflanzenwachstumsmodell eine zeitliche Entwicklung der Pflanzeneigenschaft in Form der Höhe des Erntegutbestands modelliert und für den Zeitraum der Ernte einen voraussichtlichen Wert der Höhe des Erntegutbestands oder eine voraussichtliche Ausprägung der Pflanzeneigenschaft in Form der Höhe des Erntegutbestandes ermittelt.

2. Verfahren nach Anspruch 1, **dadurch gekennzeichnet, dass** als Erntemaschine ein Mähdrescher oder ein Feldhäcksler verwendet wird.

3. Verfahren nach einem der Ansprüche 1 bis 2, **dadurch gekennzeichnet, dass** der voraussichtliche Wert oder die voraussichtliche Ausprägung der Pflanzeneigenschaft georeferenziert ermittelt wird.

4. Verfahren nach einem der Ansprüche 1 bis 3, **dadurch gekennzeichnet, dass** die Pflanzeneigenschaft eine zweite Pflanzeneigenschaft darstellt, die aus einer ersten Pflanzeneigenschaft abgeleitet wird.

5. Verfahren nach einem der Ansprüche 1 bis 4, **dadurch gekennzeichnet, dass** das Pflanzenwachstumsmodell meteorologische Daten verwendet.

6. Verfahren nach einem der Ansprüche 1 bis 5, **dadurch gekennzeichnet, dass** das Pflanzenwachstumsmodell Bodendaten verwendet.

7. Verfahren nach einem der Ansprüche 1 bis 6, **dadurch gekennzeichnet, dass** das Pflanzenwachstumsmodell Fernerkundungsdaten verwendet.

8. Verfahren nach einem der Ansprüche 1 bis 7, **dadurch gekennzeichnet, dass** eine Messvorrichtung an der Erntemaschine angebracht ist, wobei anhand der Signale der Messvorrichtung der voraussichtliche Wert oder die voraussichtliche Ausprägung der Pflanzeneigenschaft kalibriert wird.

9. Verfahren nach Anspruch 8, **dadurch gekennzeichnet, dass** die Kalibrierung einmalig am Beginn eines Erntevorgangs oder auch fortlaufend während der Ernte erfolgt, wenn die Erntemaschine über das Feld fährt und das Erntegut einsammelt.

10. Verfahren nach einem der Ansprüche 8 oder 9, **dadurch gekennzeichnet, dass** die Messvorrichtung einen berührungslosen Sensor und/oder einen Sensor für tatsächlich geerntetes Erntegut umfasst.

11. Verfahren nach einem der Ansprüche 1 bis 10, **dadurch gekennzeichnet, dass** für die Modellierung der Pflanzeneigenschaft Vergangenheitswerte aus einer vorhergehenden Wachstumsperiode oder einer vorhergehenden Ernte verwendet werden.

12. Verfahren nach einem der Ansprüche 3 bis 11, **dadurch gekennzeichnet, dass** das Feld in Segmente unterteilt wird, wobei in Abhängigkeit der Pflanzeneigenschaft zwischen Segmenten einer ersten Gruppe und Segmenten wenigstens einer zweiten Gruppe unterschieden wird.

13. Verfahren nach Anspruch 12, **dadurch gekennzeichnet, dass** zunächst die Segmente der ersten Gruppe und danach die Segmente der zweiten Gruppe geerntet werden.

14. Verfahren nach Anspruch 12, **dadurch gekennzeichnet, dass** ein erster Erntegutbehälter befüllt wird, wenn auf einem der Segmente der ersten Gruppe geerntet wird und dass ein zweiter Erntegutbehälter befüllt wird, wenn auf einem der Segmente der zweiten Gruppe geerntet wird.

## Claims

1. Method for operating a harvesting machine for harvesting a crop in a field, at least one operating value for a working part of the harvesting machine being determined in dependence on at least one plant property of the crop, **characterized in that** the plant property is mapped in the form of a height of a crop stand in a plant growth model, the plant growth model modelling a development over time of the plant property in the form of the height of the crop stand and determining a predictive value of the height of the crop stand or a predictive characteristic of the plant property in the form of the height of the crop stand for the time of the harvest.

2. Method according to Claim 1, **characterized in that** a combine harvester or a forage harvester is used as the harvesting machine.

3. Method according to either of Claims 1 and 2, **characterized in that** the predictive value or the predictive characteristic of the plant property is determined in a geo-referenced manner.

4. Method according to one of Claims 1 to 3, **characterized in that** the plant property represents a second plant property, which is derived from a first plant property.

5. Method according to one of Claims 1 to 4, **characterized in that** the plant growth model uses meteorological data.

6. Method according to one of Claims 1 to 5, **characterized in that** the plant growth model uses soil data.

7. Method according to one of Claims 1 to 6, **characterized in that** the plant growth model uses remote sensing data.

8. Method according to one of Claims 1 to 7, **characterized in that** a measuring device is attached to the harvesting machine, the predictive value or the predictive characteristic of the plant property being calibrated on the basis of the signals of the measuring device.

9. Method according to Claim 8, **characterized in that** the calibration is performed once, at the beginning of a harvesting operation, or else continuously during the harvest when the harvesting machine is travelling over the field and gathering the crop.

10. Method according to either of Claims 8 and 9, **characterized in that** the measuring device comprises a contactless sensor and/or a sensor for a crop that has actually been harvested.

11. Method according to one of Claims 1 to 10, **characterized in that** past values from a previous growth period or a previous harvest are used for the modelling of the plant property.

12. Method according to one of Claims 3 to 11, **characterized in that** the field is divided into segments, differentiating between segments of a first group and segments of at least one second group in dependence on the plant property.

13. Method according to Claim 12, **characterized in that** first the segments of the first group, and then the segments of the second group are harvested.

14. Method according to Claim 12, **characterized in that** a first crop container is filled when harvesting is carried out on one of the segments of the first group and **in that** a second crop container is filled when harvesting is carried out on one of the segments of the second group.

## Revendications

1. Procédé pour faire fonctionner une moissonneuse destinée à moissonner un produit à moissonner sur un champ, au moins une valeur opérationnelle pour un organe de travail de la moissonneuse étant déterminée en fonction d'au moins une propriété de plante du produit à moissonner, **caractérisé en ce que** la propriété de plante est représentée sous la forme d'une hauteur d'une culture de produit à moissonner dans un modèle de croissance de plante, le modèle de croissance de plante modélisant un développement dans le temps de la propriété de plante sous la forme de la hauteur de la culture de produit à moissonner et déterminant, pour la période de la moisson, une valeur probable de la hauteur de la culture de produit à moissonner ou une expression probable de la propriété de plante de la hauteur de la culture de produit à moissonner.

2. Procédé selon la revendication 1, **caractérisé en ce que** la moissonneuse utilisée est une moissonneuse-batteuse ou une ramasseuse-hacheuse.

3. Procédé selon l'une des revendications 1 à 2, **caractérisé en ce que** la valeur probable ou l'expression probable de la propriété de plante est déterminée avec géoréférencement.

4. Procédé selon l'une des revendications 1 à 3, **caractérisé en ce que** la propriété de plante représente une deuxième propriété de plante qui est dérivée d'une première propriété de plante.

5. Procédé selon l'une des revendications 1 à 4, **caractérisé en ce que** le modèle de croissance de plante emploie des données météorologiques.

6. Procédé selon l'une des revendications 1 à 5, **caractérisé en ce que** le modèle de croissance de plante emploie des données du sol.

7. Procédé selon l'une des revendications 1 à 6, **caractérisé en ce que** le modèle de croissance de plante emploie des données de télédétection.

8. Procédé selon l'une des revendications 1 à 7, **caractérisé en ce qu'**un dispositif de mesure est monté sur la moissonneuse, la valeur probable ou l'expression probable de la propriété de plante étant étalonnée à l'aide des signaux du dispositif de mesure.

9. Procédé selon la revendication 8, **caractérisé en ce que** l'étalonnage est réalisé une seule fois au début d'une opération de moisson ou également en continu pendant la moisson, lorsque la moissonneuse est conduite sur le champ et collecte le produit à moissonner.

10. Procédé selon l'une des revendications 8 ou 9, **caractérisé en ce que** le dispositif de mesure comporte un capteur sans contact et/ou un capteur pour le produit à moissonner effectivement moissonné.

11. Procédé selon l'une des revendications 1 à 10, **caractérisé en ce que** des valeurs antérieures issues d'une période de croissance précédente ou d'une moisson précédente sont utilisées pour la modélisation de la propriété de plante.

12. Procédé selon l'une des revendications 3 à 11, **caractérisé en ce que** le champ est subdivisé en segments, une distinction étant faite entre les segments d'un premier groupe et les segments d'au moins un deuxième groupe en fonction de la propriété de plante.

13. Procédé selon la revendication 12, **caractérisé en ce que** les segments du premier groupe sont tout d'abord moissonnés, et ensuite les segments du deuxième groupe.

14. Procédé selon la revendication 12, **caractérisé en ce qu'**un premier réservoir de produit à moissonner est rempli lorsque la moisson est effectuée sur l'un des segments du premier groupe et **en ce qu'**un deuxième réservoir de produit à moissonner est rempli lorsque la moisson est effectuée sur l'un des segments du deuxième groupe.
